# EUROPÄISCHE PATENTSCHRIFT

(11) **EP 0 287 706 B1**
(45) Veröffentlichungstag und Bekanntmachung des Hinweises auf die Patenterteilung: **19.01.1994**
(21) Anmeldenummer: 87114255.0
(22) Anmeldetag: 30.09.1987
(51) Int. Cl.: H01J 61/35, H01J 61/12, H01J 9/24

(54) **Wasserstoff-Entladungslampe und Verfahren zu ihrer Herstellung**
Hydrogen discharge lamp and method of manufacturing it
Lampe à décharge d'hydrogène et procédé pour sa fabrication

(30) Priorität: 24.04.1987 DE 3713704
(43) Veröffentlichungstag der Anmeldung: 26.10.1988
(73) Patentinhaber: Heraeus Instruments GmbH, 63450 Hanau (DE)
(72) Erfinder: Witt, Jürgen, Dr., D-6452 Hainburg (DE); Kremmling, Horst, Dr., D-6477 Limeshain 2 (DE); Schwarz, Werner, D-6450 Hanau (DE)
(74) Vertreter: Kühn, Hans-Christian

(56) Entgegenhaltungen:
- DE-A- 2 906 038
- DE-B- 1 539 414
- DE-C- 636 651
- FR-A- 1 522 814

## Beschreibung

Die Erfindung betrifft eine Wasserstoff-Entladungslampe mit einem Lampenkolben, und darin angeordneten Elektroden, der wenigstens im Emissionsbereich einen für UV-Licht durchlässigen Bereich, der Boroxid aufweist, enthält.

Unter dem Begriff Wasserstofflampen sollen in vorliegender Erfindung Gasentladungslampen verstanden werden, die entweder mit Wasserstoff oder Deuterium oder mit einem Gemisch beider gefüllt sind.

Im Vergleich zu ihrer Anfangsintensität erfahren Wasserstofflampen im Laufe ihrer Betriebszeit einen Intensitätsverlust, der im wesentlichen auf eine Abnahme der Kolbentransmission zurückzuführen ist. Diese Transmissionsabnahme wird hervorgerufen insbesondere durch von der Kathode stammendes Emittermaterial, wie beispielsweise Barium, Strontium, Kalzium, das sich an der Kolbeninnenwand niederschlägt. Das Material diffundiert in das Quarzglas hinein und reagiert mit diesem. Hierdurch wird die hohe UV-Strahlungsdurchlässigkeit des reinen Quarzglases, insbesondere im Wellenlängenbereich unterhalb 250 nm, stark reduziert.

Als Lebensdauer einer Wasserstofflampe wird im allgemeinen die Zeitdauer definiert, die sie betrieben werden kann, bis bei einer vorgegebenen Wellenlänge ihre Intensität um wenigstens 50 % gegenüber ihrer Anfangsintensität abgesunken ist. So beträgt die Lebensdauer bei einer Wellenlänge von 230 nm bei Lampen mit herkömmlicher Kathodenkonstruktion ca. 750 Stunden.

Aus der DE-B-15 39 414 ist eine Entladungslampe mit einem Lampenkolben aus glasiger Kieselsäure bekannt, welche in den Kolben ragende Elektroden aufweist; um eine Entglasung bei erhöhten Temperaturen zu vermeiden und die Lebensdauer bei hohen Temperaturen zu verbessern, ist auf die Innenfläche des Lampenkolbens eine Schicht aus Bortrioxyd-Quarzglas aufgebracht, deren Schmelztemperatur unterhalb der Betriebstemperatur des Lampenkolbens liegt. Es handelt sich hierbei um einen mit Argon als Grundgasfüllung arbeitenden Hochtemperaturstrahler, dessen spektrale Lichtausbeute im wesentlichen oberhalb von 300 nm liegt.

Weiterhin ist aus der DE-A-29 06 038 ein Lampenkolben aus Quarzglas mit einer eindiffundierten Siliziumdioxid-Boroxid-Glasschicht auf der Kolbeninnenwand bekannt, die ihrerseits mit einer Deckschicht aus Quarzglas mit vermindertem Boroxid-Gehalt abgedeckt ist. Als problematisch erweist es sich, daß die zum Kolbeninneren gerichtete Quarzglasschicht durch Emittermaterialien wie Barium, Strontium oder Kalzium mittels Diffusion angegriffen wird und durch Reaktion die UV-Strahlendurchlässigkeit insbesondere im Wellenlängenbereich von 250 nm stark reduziert wird.

Aus der US-PS 3,956,655 ist eine mit Wasserstoff oder Deuterium gefüllte Entladungslampe bekannt, bei der Borosilikatglas als Kolbenmaterial verwendet wird, wobei eine um den Faktor 2 längere Lebensdauer im fraglichen Wellenlängen-Bereich erzielt wird. Diese längere Lebensdauer beruht auf der chemisch gesehen höheren Resistenz von Borosilikatglas gegenüber Erdalkalien, als es bei Quarzglas der Fall ist. Die gegenüber Quarzglas geringere UV-Durchlässigkeit des Borosilikatglases muß hier durch eine dünnere Wand kompensiert werden. Dies geschieht entweder durch ringförmiges Dünnziehen oder tubusförmiges Ausblasen des Glaskolbens.

Es ist hier ein zusätzlicher mechanischer Aufwand notwendig. Weiterhin besteht aufgrund der verringerten Wandstärke mit ca. 0,3 mm eine erhöhte Bruchgefahr.

Die Erfindung stellt sich die Aufgabe, die Lebensdauer von Wasserstofflampen zu verbessern, die einen Lampenkolben aus Quarzglas aufweisen; dabei soll die Transmission des Lampenkolbens im Wellenlängenbereich von < 300 nm nur um weniger als 10 % reduziert werden.

Die Aufgabe wird erfindungsgemäß durch die kennzeichnenden Merkmale des Anspruchs 1 gelöst.

In einer bevorzugten Ausführungsform des Gegenstandes der Erfindung ist auf der der Entladung zugekehrten Innenseite des Lampenkolbens wenigstens in einem Bereich eine Borosilikatschicht aufgebracht.

Bei einer weiteren bevorzugten Ausführungsform des Gegenstandes der Erfindung enthält die der Entladung zugekehrte Innenseite des Lampenkolbens wenigstens in einem Bereich eindiffundiertes Boroxid bis zu einer Stärke von 10 µm.

Weitere vorteilhafte Ausgestaltungen des Gegenstandes der Erfindung sind den abhängigen Ansprüchen zu entnehmen.

Als vorteilhaft erweist sich die bei gleicher Wandstärke gegenüber bekannten Lampen höhere Transmission im Wellenlängenbereich unterhalb 250 nm; der Gegenstand der Erfindung ist auch auf Lampen mit Kolben aus synthetischem Quarzglas anwendbar, deren Einsatzbereich sich auch auf Wellenlängen unterhalb 200 nm erstreckt.

Weiterhin erweist es sich als vorteilhaft, die erfindungsgemäße Lampe in einem Umfeld höherer Temperatur einsetzen zu können, insbesondere bei Hochtemperatureinsätzen, wie sie z.B. in Abgassystemen, Testsystemen oder Schornsteinen erforderlich sein können.

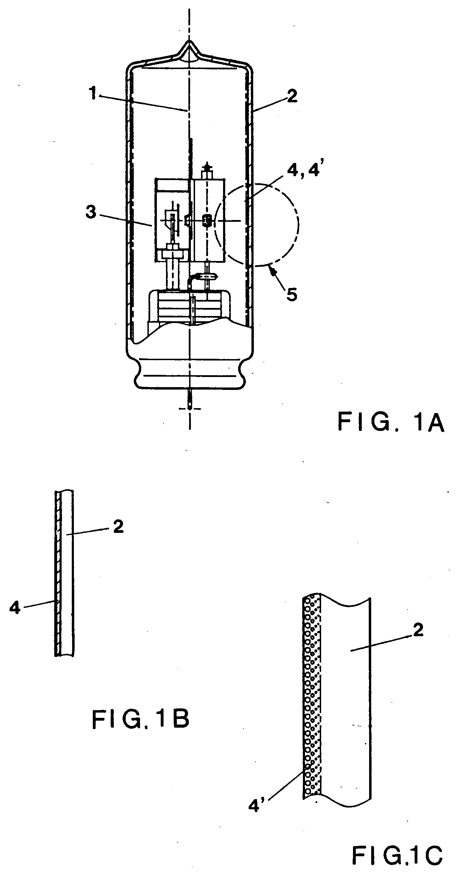

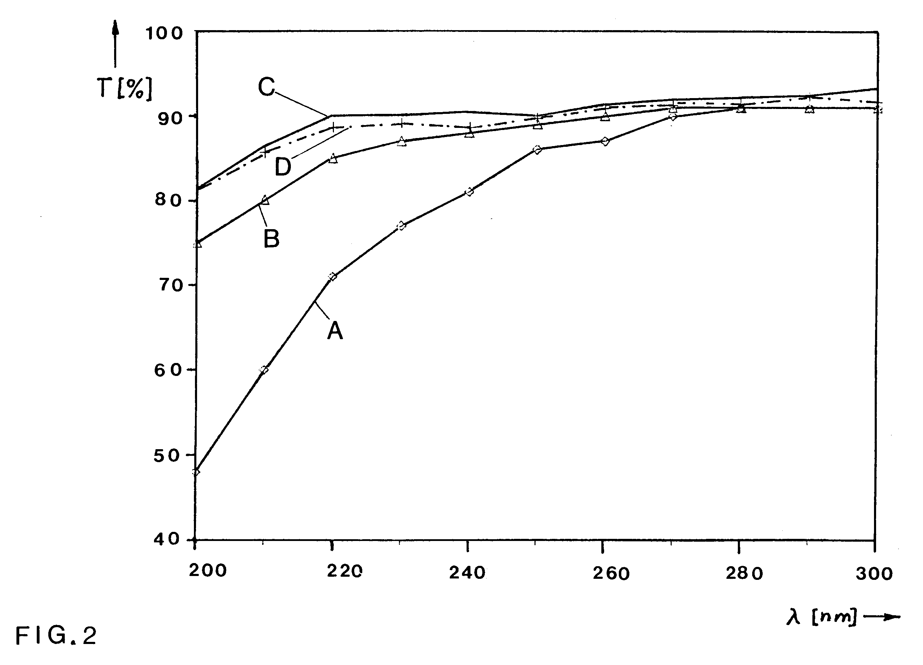

Im folgenden ist der Gegenstand der Erfindung anhand der Figuren 1A, 1B, 1C, und 2 näher erläutert. Figur 1A zeigt einen aufgebrochenen Längsschnitt durch die Lampe; Figur 1B zeigt einen Längsschnitt durch den Schichtenaufbau der Kolbenwand in Höhe der Elektrodenanordnung; Figur 1C zeigt einen Längsschnitt durch die Kolbenwand mit eindiffundierter Borosilikatglasschicht. Figur 2 zeigt ein Transmissionsdiagramm für die verschiedenen Anordnungen.

Gemäß Figur 1A befindet sich im Bereich der Achse 1 des zylindrischen Lampenkolbens 2 das aus Anode und Kathode bestehende Elektrodensystem im Gehäuse 3, wobei zur Erzielung einer möglichst hohen Strahldichte zwischen den als Wendel ausgeführten Elektroden eine Blende aus hochschmelzendem Metall, wie z.B. Molybdän, angeordnet ist. Der Öffnungswinkel der emittierten Strahlung liegt z.B. im Bereich von 30 - 40°.

Auf der Innenseite des aus Quarzglas bestehenden Lampenkolbens 2 befindet sich die erfindungsgemäße Schicht 4. Ihre schichtstärke liegt in einem Bereich zwischen 50 nm und 10 µ. Zur besseren Erkennbarkeit ist diese äußerst dünne Schicht 4 in der Figur durch gestrichelte Linien dargestellt. Die Figuren 1B und 1C stellen jeweils Längsschnitte der Kolbenwand im Bereich des gestrichelten Kreises 5 dar.

Figur 1B zeigt einen Längsschnitt der Wand der erfindungsgemäßen Lampe in Höhe des Elektrodensystems; in dieser Figur ist die Schicht 4 zwecks besserer Übersicht durch Schraffierung dargestellt.

Es ist möglich, durch Tauchen in eine Lösung, wie z.B. Borsäure, die Innenseite des Lampenkolbens 2 zu beschichten, doch kann Boroxid auch durch Kathodenzerstäubung oder durch thermisches Aufdampfen auf die Innenseite des Lampenkolbens aufgebracht werden.

Beim Aufbringen einer Boroxidsuspension durch Tauchen, Aufspritzen oder Auftragen wird nach Antrocknen ein Einbrennvorgang durchgeführt, durch den die Oberfläche der Quarzglasschicht unter Bildung von Borosilikatglas verglast wird.

Durch Maskierung der Innenseite des Lampenkolbens 2 oder partielles Aufsprühen oder Auftragen der Suspension ist es auch möglich, nur den für den Durchtritt des Strahlenbündels vorgesehenen Teil der Innenseite des Lampenkolbens mit der erfindungsgemäßen Schicht zu versehen. Hierbei ist allerdings eine möglichst genaue Justierung der Strahlenaustrittsrichtung erforderlich.

Figur 1C zeigt im Längsschnitt einen Lampenkolben 2, der auf seiner Innenseite eine Borosilikatfläche 4' aufweist, die jedoch keine eigenständige Schicht wie in Figur 1B mehr darstellt. Vielmehr bilden das Quarzglas des Kolbens und das Borosilikatglas eine durchgehende Struktur, wobei die Innenseite Borosilikatglas als Oberfläche aufweist; die Borosilikatfläche 4' ist gemäß Figur 1C zwecks besserer Übersicht durch Punkte symbolisch dargestellt.

Zur Herstellung wird die Innenseite des Quarzglaskolbens mit einer dünnen Schicht einer Boroxidsuspension versehen, die nach kurzem Antrocknen, z.B. mit einer Flamme, eingebrannt wird. Hierdurch wird eine Borosilikatglas-Oberfläche gebildet, die wegen ihrer geringen Stärke die Transmission des Quarzglases nicht nachteilig beeinflußt. Durch diese Borosilikatgals-Oberfläche wird die Innenseite des Kolbens chemisch resistent gegen die sich während des Lampenbetriebs niederschlagenden Erdalkalien. Hieraus resultiert eine geringere Transmissionsabnahme und somit eine längere Lebensdauer der Wasserstofflampe.

Figur 2 zeigt die spektrale Transmission in Prozent für verschiedene Kolbenmaterialien im Ultraviolett-Bereich von 200 bis 300 nm Wellenlänge. Dabei zeigt Kurve A die Transmission 1 mm starken Borosilikatglases. Hier ist erkennbar, daß die Transmission bei 200 nm knapp unter 50 % liegt, während sie mit zunehmender Wellenlänge steigt und im Bereich von 250 nm bereits ein Transmissionsgrad von ca. 85 % erzielt wird. Kurve B zeigt die Transmission von Borosilikatglas mit einer Stärke von 0,3 mm; aufgrund der geringeren Stärke liegt eine erheblich verbesserte Transmission vor, so daß bei 200 nm bereits ein Transmissionswert von 74 % erzielt wird, wobei der Anstieg mit zunehmender Wellenlänge im Verhältnis zur Kurve A gering ist. So erreicht die Transmission bei einer Wellenlänge von 250 nm einen Wert von ca. 88 %.

Kurve C zeigt den Verlauf der Transmission für 1 mm starkes Quarzglas. Hier ist erkennbar, daß bereits bei einer Wellenlänge von 200 nm ein Transmissionswert von ca. 82 % erzielt wird, während im Wellenlängenbereich von 250 nm die Transmission bei ca. 90 % liegt.

Die strichpunktierte Kurve D zeigt die spektrale Transmission für 1 mm starkes Kolbenmaterial, das gemäß Figur 1c auf seiner Innenseite eindiffundiertes Boroxid enthält. Hier ist erkennbar, daß die Absorption gegenüber reinem Quarzglas sehr gering ist. Die Transmissionswerte der Kurve D liegen im Wellenlängenbereich von 200 bis 260 nm erheblich über den Werten der für Borosilikatglas gleicher Stärke geltenden Kurve A; die Transmissionswerte der Kuve D erreichen mit einer Abweichung von höchstens 2 % nahezu die Transmissionswerte der Kurve C.

Im Wellenlängenbereich von 270 bis 300 nm ist erkennbar, daß die Wirkung der Absorption mit zunehmender Wellenlänge nachläßt, wobei der Transmissionswert praktisch nur noch aus Reflexionsverlusten an den Grenzflächen resultiert.

## Patentansprüche

1. Wasserstoff-Entladungslampe mit einem Lampenkolben und darin angeordneten Elektroden, der wenigstens im Emissionsbereich einen für UV-Licht durchlässigen Bereich, der Boroxid aufweist, enthält, dadurch gekennzeichnet, daß die Elektroden als Emittermaterial Mischoxide aus Barium, Kalzium, Strontium aufweisen, daß der Lampenkolben (2) aus Quarzglas besteht und auf der der Entladung zugekehrten Innenseite wenigstens einen Bereich aus Borosilikatglas aufweist.

2. Wasserstoff-Entladungslampe nach Anspruch 1, dadurch gekennzeichnet, daß wenigstens in dem Bereich auf die Innenseite des Lampenkolbens (2) eine Borosilikatglasschicht (4) aufgebracht ist.

3. Wasserstoff-Entladungslampe nach Anspruch 1, dadurch gekennzeichnet, daß wenigstens in dem Bereich die Innenseite des Lampenkolbens (2) bis zu einer Stärke von 10 µm eindiffundiertes Boroxid enthält.

4. Wasserstoff-Entladungslampe nach Anspruch 3, dadurch gekennzeichnet, daß der Boroxidgehalt weniger als 25 % beträgt.

5. Wasserstoff-Entladungslampe nach einem oder mehreren der vorhergehenden Ansprüche, dadurch gekennzeichnet, daß die gesamte Innenseite des Lampenkolbens (2) Boroxid aufweist.

## Claims

1. A hydrogen discharge lamp with a lamp bulb and electrodes arranged therein, which contains at least in the emission region a region which is permeable by UV light, which has boric oxide, characterised in that the electrodes have as emitter material mixed oxides of barium, calcium, strontium, that the lamp bulb (2) consists of quartz glass and has at least one region of borosilicate glass on the inner side facing the discharge.

2. A hydrogen discharge lamp according to Claim 1, characterised in that a borosilicate glass layer (4) is applied at least in the region on the inner side of the lamp bulb (2).

3. A hydrogen discharge lamp according to Claim 1, characterised in that at least in the region the inner side of the lamp bulb (2) contains up to a thickness of 10 µm of diffused-in boric oxide.

4. A hydrogen discharge lamp according to Claim 3, characterised in that the boric oxide content amounts to less than 25%.

5. A hydrogen discharge lamp according to one or more of the preceding claims, characterised in that the entire inner side of the lamp bulb (2) has boric oxide.

## Revendications

1. Lampe à décharge à hydrogène avec une ampoule de lampe et des électrodes agencées à l'intérieur de celle-ci, l'ampoule contenant au moins dans la région d'émission une région transparente à la lumière UV, qui contient de l'oxyde de bore, caractérisée en ce que les électrodes comportent en tant que matériau d'émission des oxydes mixtes de baryum, de calcium, ou de strontium, en ce que l'ampoule de lampe (2) est réalisée en verte de quartz et en ce qu'elle comporte sur le côté intérieur dirigé vers la décharge au moins une région en verre borosilicate.

2. Lampe selon la revendication 1, caractérisée en ce que, au moins dans la région sur le côté intérieur de l'ampoule de lampe (2), est appliquée une couche de verre borosilicate (4).

3. Lampe selon la revendication 1, caractérisée en ce que, au moins dans cette région, le côté intérieur de l'ampoule de lampe (2) contient de l'oxyde de bore diffusé jusqu'à une épaisseur de 10 µm.

4. Lampe selon la revendication 3, caractérisée en ce que la teneur en oxyde de bore est inférieure à 25%.

5. Lampe selon l'une ou plusieurs des revendications précédentes, caractérisée en ce que la totalité du côté intérieur de l'ampoule de lampe (2) comporte de l'oxyde de bore.
